Europäisches Patentamt

(19) European Patent Office    (11) Numéro de publication: **0 283 385**

Office européen des brevets    **B1**

(12)    **FASCICULE DE BREVET EUROPEEN**

(45) Date de publication du fascicule du brevet: **30.01.91**    (51) Int. Cl.⁵: **F 16 L 59/02**

(21) Numéro de dépôt: **88400557.0**

(22) Date de dépôt: **10.03.88**

(54) **Revêtement destiné à la protection thermique d'une structure soumise à des conditions d'agressions thermiques intenses.**

(30) Priorité: **13.03.87 FR 8703477**

(43) Date de publication de la demande:
**21.09.88 Bulletin 88/38**

(45) Mention de la délivrance du brevet:
**30.01.91 Bulletin 91/05**

(84) Etats contractants désignés:
**BE CH DE ES FR GB IT LI NL**

(56) Documents cités:
**FR-A-2 061 509**
**US-A-4 495 764**

(73) Titulaire: **ETAT-FRANCAIS représenté par le DELEGUE GENERAL POUR L'ARMEMENT (DPAG)**
**Bureau des Brevets et Inventions de la Délégation Générale pour l'Armement 26, Boulevard Victor**
**F-75996 Paris Armées (FR)**

(72) Inventeur: **Sanmartin, Marie-Louise**
**77, Avenue de Toulouse**
**F-65600 Semeac (FR)**
Inventeur: **Fries, Jean-François**
**48, Chemin des Poudrières**
**F-65000 Tarbes (FR)**

Courier Press, Leamington Spa, England.

## Description

L'invention concerne un revêtement destiné à la protection thermique d'une structure soumise à des conditions d'agressions thermiques intenses.

Il existe de nombreuses protections destinées à permettre de maintenir une structure à une température admissible, lorsque cette dernière est soumise à des conditions d'agressions thermiques intenses pendant un temps plus ou moins long. Ces différentes protections peuvent être classées selon trois classes différentes, fonction de leur mode d'action: protection active, protection semi-active, protection passive.

Les protections actives sont constituées d'un matériau isolant intégrant une matière active adaptée pour se vaporiser ou transpirer lors de la mise en température de l'écran. Ces protections, telles que décrites dans les brevets français nos 2 061 509, 2 512 169, 2 547 895 et 2 592 131, stabilisent donc, globalement, la température de la structure à protéger, aux environs de la température de vaporisation ou de transpiration de la matière active (100°C environ dans le cas de l'eau). Ensuite, elles se comportent comme un isolant ordinaire. On s'aperçoit donc que l'élévation de température de la structure est non négligeable. De plus, la protection est effective tant que la matière active n'est pas totalement épuisée. On encourt donc le risque de se trouver, en cas d'incendie, sans la quantité suffisante de matière active dont le rôle et la fonction sont primordiaux au niveau de l'efficacité de la protection. La solution à ce dernier problème, consistant à recycler, dans le cas de l'eau, la vapeur surchauffée après sa condensation, ou à réinjecter de l'eau (ou le liquide sélectionné) au fur et à mesure de son évaporation, ne constitue pas, par ailleurs, une solution adéquate dans tous les cas de figure.

Les protections semi-actives sont, quant à elles, constituées de matériaux d'ablation de moyenne densité (1, 7 environ) tel que, par exemple, le composite carbone-carbone consistant en des fibres ou un tissu de carbone enrobé dans une matrice de carbone. Bien qu'offrant une bonne protection, ces matériaux présentent deux inconvénients majeurs. Tout d'abord, ils constituent des isolants externes radiatifs ou des matériaux ablatifs au-dessus d'une certaine température. Par conséquent, comme précédemment, la protection diminue au fur et à mesure que ces protections se consomment (par exemple en brûlant). Par ailleurs, ces protections sont d'un prix de revient relativement onéreux.

Le brevet US-A-4 425 764 concerne un matériau tricouche intégrable dans un conteneur pour roquette. Chaque couche a une fonction bien définie. La couche interne est du type ablatif, et est adaptée à des utilisations à usage unique pendant un temps très court. Ce matériau ne convient pas à une utilisation permanente de protection longue durée.

Les protections passives rassemblent, enfin, tous les nombreux systèmes d'isolation externe obtenus par diverses associations de revêtements protecteurs à base de fibres réfractaires ou de laine de quartz, de silice, de matériaux alvéolaires divers ou de systèmes à écrans réflecteurs. Actuellement, toutefois, il n'existe pas de protection passive apte à empêcher l'élévation de température interne d'une structure maintenue dans un incendie pendant une heure au moins et ce, pour des masses et coûts surfaciques acceptables.

La présente invention vise à combler cette lacune et se propose de fournir une protection passive de faible densité et de faible coût, apte à maintenir une température constante, voisine de 20°C environ, à l'intérieur d'une structure soumise à des agressions thermiques intenses, pendant une heure au moins.

Un autre objectif de l'invention est de fournir une protection qui ne brûle pas et n'émet pas de gaz toxiques ou corrosifs. Un autre objectif est de fournir une protection qui, après une épreuve thermique, présente un endommagement très faible, facilement rénovable.

Un autre objectif et de fournir une protection pouvant être appliquée sur la structure à protéger, soit directement sous la forme de plaques à coller, soit par couches successives.

A cet effet, le revêtement destiné à la protection thermique d'une structure, objet de l'invention, se caractérise en ce qu' il est consitué d'au moins trois couches superposées de natures différentes:

une couche interne constituée d'un matériau alvéolaire ou syntactique d'isolation thermique ayant une masse volumique comprise entre environ 30 à 100 kg/m³ et une épaisseur de l'ordre de 10 à 100 mm collée ou appliquée sur la structure,

une couche intermédiaire appliquée sur la couche interne, constituée d'un matériau réfractaire minéral, sous la forme d'un feutre allégé de fibres minérales, et ayant une masse volumique de 150 à 400 kg/m³,

et une couche superficielle dite externe, appliquée sur la couche intermédiaire, constituée d'un matériau composite comprenant une matrice minérale ou organominérale enrobant des charges structurales de renfort, ayant une densité comprise entre environ 1,1 et 1,4.

(Il est à noter que par matériau alvéolaire on entend également englober les mousses syntactiques.)

Ce revêtement est donc constitué de trois couches distinctes jouant chacune un rôle spécifique et dont l'association permet d'obtenir un revêtement isolant thermique total, de faible densité, non susceptible de brûler ou d'émettre des gaz toxiques ou corrosifs.

La couche superficielle externe assure la cohésion structurale du revêtement et est constituée par un matériau composite résistant au feu et aux chocs thermiques.

La matrice minérale de la couche externe peut être une matrice à base d'un matériau durcissable apte à durcir en milieu aqueux sous l'action de réactifs alcalins. Il peut être mis en oeuvre par tous les procédés classiques de fabrication de matériaux stratifiés, tels que contact, drapage, enroulement.., utilisés pour les matériaux composites organiques thermodurcissables, avec le bénéfice d'une stabilité thermique jusqu'à 1300 °C au moins.

L'épaisseur de cette couche peut varier entre quelques dixièmes de millimètres et plusieurs centimètres selon les exigences de masse surfacique minimale ou au contraire les degrés de structuralité ou d'inertie thermique souhaités.

La matrice minérale peut être à base d'argiles modifiées en vue de les rendre réactives et aptes à réagir en milieu aqueux sous l'action de durcisseurs liquides alcalins.

Les charges structurales de renfort de la couche externe peuvent être constituées de fibres métalliques, en particulier d'acier inoxydable, ou de fibres minérales, en particulier verre, silice, notamment sous forme de tissu, nappe de fibres, mât, ayant reçu un apprêt protecteur contre les réactifs alcalins, ou sous forme de pré-imprégné.

Les charges structurales de renfort de la couche externe peuvent être constituées de fibres organiques, en particulier carbone, aramide, polyester, notamment sous forme de tissu, nappe de fibres ou de mât.

Les charges structurales de renfort de la couche externe peuvent être constituées de fibres réfractaires notamment sous forme de tissu, nappe de fibres ou de mât, ayant reçu un apprêt protecteur contre les réactifs alcalins, ou sous forme de pré-imprégné.

La couche externe peut comprendre des charges additionnelles de réfractaires pulvérulents, constituées par exemple de céramique de quartz broyé, de sable, de zircone.

Le matériau constituant la couche interne peut être un matériau d'origine naturelle comme le liège, ou à base de résine thermodurcissable ou thermoplastique.

Le matériau de la couche interne peut être une mousse rigide de polyuréthane à cellules fermées.

Le matériau de la couche interne est peut être chargé d'une poudre réfractaire.

Le revêtement peut comprendre des réflecteurs constitués d'écrancs aluminisés disposés au niveau de l'interface de chaque couche, et revêtus d'un film protecteur contre les réactifs alcalins.

La couche superficielle externe peut être constituée d'argiles modifiées en vue de les rendre chimiquement réactives et aptes à réagir en milieu aqueux sous l'action de durcisseurs alcalins, les charges structurales de renfort étant constituées de fibres sous forme de tissu, nappe de fibres pré-imprégné, mât, ayant une épaisseur de l'ordre de 15 mm, la couche intermédiaire a une épaisseur de l'ordre de 25 mm, la couche interne (4) est constituée d'un matériau de faible densité d'origine naturelle, comme du liège, ou à base de résine thermodurcissable ou thermoplastique, ayant une épaisseur de l'ordre de 40 mm, des réflecteurs constitués d'écrans aluminisés étant diposés au niveau de l'interface de chaque couche.

La couche intermédiaire, constituée d'un matériau réfractaire minéral de faible densité, forme quant à elle l'écran pare-feu. Cette couche est constituée avantageusement d'un feutre allégé constitué de fibres réfractaires, principalement silice et alumine et, éventuellement, d'autres matériaux choisis en vue de diminuer sa conduction.

Ce feutre, de masse volumique de 150 à 400 kg/m$^3$ est, en outre, choisi de façon à résister à des températures données: 1200°C, 1400°C ou 1600°C. L'épaisseur de ce feutre varie de quelques millimètres à plusieurs dizaines de millimètres selon les niveaux d'agression thermique envisagés et celui de la protection à assurer.

La couche interne constituée d'un matériau alvéolaire d'isolation thermique constitue, enfin, la barrière thermique du revêtement. Cette couche est avantageusement constituée d'un matériau de faible densité à base de résine thermodurcissable ou thermoplastique.

En complément de ces trois couches, le revêtement peut, en outre, être avantageusement doté de réflecteurs constitués d'écrans aluminisés disposés au niveau de l'interface de chaque couche, et revêtus de préférence d'un film protecteur contre les réactifs alcalins. Ces réflecteurs permettent en effet de réfléchir le rayonnement thermique.

Selon un mode de réalisation préférentiel, ce revêtement comprend:

une couche superficielle externe constituée d'un matériau composite comprenant une matrice minérale à base d'argiles modifiées en vue de les rendre chimiquement réactives et aptes à réagir en milieu aqueux sous l'action de durcisseurs alcalins, et des charges structurales de renfort constituées de fibres métalliques, en particulier d'acier inoxydable, ou minérales notamment sous forme de tissu, nappe de fibres, ayant reçu de préférence un apprêt protecteur contre les réactifs alcalins ou sous forme de pré-imprégné.

une couche intermédiaire constituée d'un feutre allégé constitué de fibres réfractaires,

une couche superficielle interne constituée d'un matériau de faible densité d'origine naturelle, comme du liège, ou à base de résine thermodurcissable ou thermoplastique,

des réflecteurs constitués d'écrans aluminisés diposés au niveau de l'interface de chaque couche.

Un revêtement tel que décrit ci-dessus présente une masse surfacique très faible de 8 à 14 kg/m². Il rend en outre possible, en jouant sur les épaisseurs des différentes couches, les taux de charges, de dimensionner exactement la protection en fonction de la securité qu'elle doit assurer: par exemple, température de 20°C à l'intérieur d'une structure pendant une heure environ et pour des températures extérieures données.

Par ailleurs, sa mise en oeuvre est très simple et peut être réalisée, soit à partir de plaques réalisées préalablement et à rapporter par collage sur une structure, soit par la mise en oeuvre des matériaux en couches successives, directement sur cette structure.

Ces différentes caractéristiques permettent d'envisager l'emploi de ce revêtement dans des domaines très variés:

protection contre les effets thermiques des armes nucléaires ou autres agressions thermiques intenses, d'installations fixes ou mobiles renfermant des hommes ou du matériel, de dépôts d'explosifs, d'armes...

utilisation pour des besoins civils: bâtiment, transport, cloison pare-feu ou encore conditionnement de produits ou dispositifs thermo-sensibles.

En fait, d'une manière générale, l'invention s'applique avantageusement à la protection de toute structure réalisée en matériaux composites ou alliages légers classiques qui ne supportent pas de températures élevées sans diminution notable des caractéristiques mécaniques des matériaux constitutifs.

D'autres caractéristiques, buts et avantages de l'invention se dégageront de la description qui suit, en référence au dessin annexé, lequel présente un schéma illustrant un revêtement selon l'invention, monté sur la paroi d'une structure à protéger.

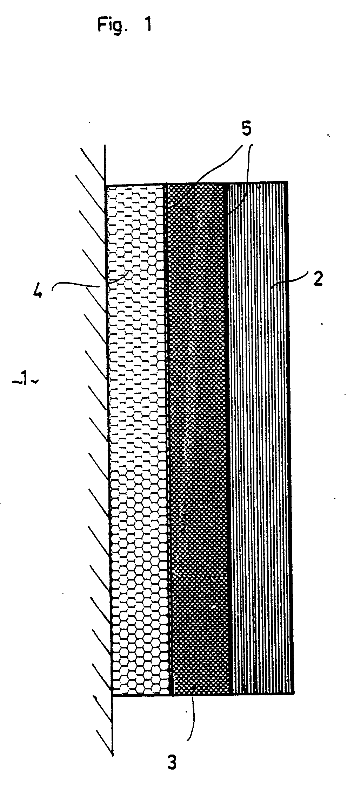

Le revêtement de protection représenté à la figure 1, collé sur la paroi d'une structure 1 à protéger, comprend, en premier lieu, une couche superficielle externe 2 résistant contre les agressions thermiques, chimiques et atmosphériques et assurant une certaine tenue mécanique. Cette couche externe 2 est constituée d'un matériau composite de faible épaisseur, comprise entre quelques dixièmes de millimètres et plusieurs centimètres, et dont la matrice minérale est formée d'un matériau durcissable apte à durcir en milieu aqueux sous l'action de réactifs alcalins, et enrobe des charges structurales de renfort.

Cette matrice minérale est à base d'argiles modifiées en vue de les rendre actives et aptes à réagir en milieu aqueux sous l'action de durcisseurs liquides alcalins, pour donner, après durcissement, un matériau réfractaire de densité comprise entre 1,1 et 1,4. L'ajustement de cette densité est obtenu en intégrant dans ce matériau composite des charges additionnelles de réfractaires pulvérulents, dans des proportions déterminées. Ces charges peuvent être constituées de poudres de céramique de quartz broyé, de sable, de zircone...

Cette matrice peut, en outre, être du type minéral à 100 % (céramiques, aluminosilicates...) ou du type organominéral, c'est-à-dire intégrant de faibles quantités de liants organiques, carbonisables ou non.

Les charges structurales de renforts de la matrice sont, quant à elles, constituées de fibres notamment sous-forme de tissu, nappe de fibres, pré-imprégné, mât...Ces fibres peuvent être d'origne métallique (acier inoxydable) ou d'origine minérale (verre, silice...) organique (carbone, aramide, polyester...) ou réfractaire, pouvant avoir reçu un apprêt protecteur contre les réactifs alcalins. La matrice minérale présente par ailleurs l'avantage de constituer un adhésif bien adapté à l'assemblage du matériau composite sur un écran réflecteur du rayonnement infrarouge formé par une mince feuille d'aluminium poli ou un papier aluminisé.

La couche sous-jacente 3 de la couche externe 2 est constituée d'un feutre allégé de fibres réfractaires telles que silice ou alumine formant l'écran pare-feu. Ce feutre, de masse volumique variable entre 150 et 400 kg/m$^3$ est adapté pour résister à des niveaux de température définis: 1200, 1400 ou 1600°C. Son épaisseur varie de quelques millimètres à plusieurs dizaines de millimètres en fonction des niveaux d'agression thermique e'visagés et du niveau de protection à assurer.

Un tel feutre, par exemple de la classe 1200°C, permet lorsqu'il est soumis à une flamme dont la température moyenne s'élève à 1000°C, pendant environ 60 minutes, d'abaisser la température, côté opposé à la flamme, à moins de 150°C pour une épaisseur de feutre de 30 mm.

La couche sous-jacente 4 de la couche intermédiaire 3 est constituée d'un matériau alvéolaire ou syntactique d'isolation thermique, de faible densité, éventuellement chargé d'une poudre réfractaire. Il peut aussi être constitué par du liège, mis en oeuvre sous forme de plaques.

Ce matériau alvéolaire est à base de résime thermoplastique ou thermodurcissable, telle qu'une mousse rigide de polyuréthane à cellules fermées. Cette mousse, d'épaisseur variable (10 à 100 mm environ) a une masse volumique ajustable de 30 à 100 kg/m$^3$. La poudre réfractaire renfermée par cette mousse est quant à elle incorporée lors de la mise en oeuvre, soit à l'un ou l'autre des constituants (isocyanate ou polyol), soit à l'agent porogène éventuellement utilisé.

Le choix de cette mousse de polyuréthane, bien que non limitatif, est dicté par les nombreux avantages de ce matériau peu coûteux, qui offre de nombreuses possibilités de mise en oeuvre industrielle, avec une grande simplicité, soit par coulées, en plaques, en couches successives, en moule ouvert ou fermé, soit par projection...

En outre, ce matériau présente des qualités d'adhésion sur tous les matériaux de construction, accompagnées d'un moussage immédiat.

En dernier lieu, ce revêtement comprend au niveau de l'interface entre chaque couche 2, 3, 4, des écrans 5 réflecteurs, en papier aluminisé ou en feuilles d'aluminium poli; le rôle de ces écrans 5 est de réfléchir le rayonnement thermique.

La mise en oeuvre d'un tel revêtement peut être réalisée, soit par application directe de plaques à coller sur la structure à protéger, soit en mettant en oeuvre successivement les différentes couches.

En outre, ce revêtement peut être peint ou également être teint dans la masse.

Une fois mis en place et suivant les différentes épaisseurs et composants de chaque couche, ce revêtement garantit le maintien d'une température constante, de l'ordre de 20°C, à l'intérieur d'une structure soumise à des conditions d'agressions thermiques intenses avec ou sans flammes.

Lors de cette éventuelle agression thermique, le revêtement présente en outre l'avantage de ne pas brûler et de ne pas émettre de gaz toxiques ou corrosifs. Le seul endommagement que subit ce revêtement est en effet limité à un effritement de la couche externe 2. On constate donc, qu'après rénovation partielle ou totale de cette couche externe, ce revêtement est à nouveau utilisable, sans affaiblissement de ses capacités.

Les exemples suivants illustrent clairement le comportement caractéristique d'un revêtement conforme à l'invention soumis à deux types d'agression thermique.

Exemple 1

Lors de cet essai, le revêtement est apposé sur une enceinte en alliage léger de 2 mm d'épaisseur de paroi, à l'intérieur de laquelle on souhaite maintenir une température de 20°C. Les dimensions extérieures de la structure ainsi réalisée sont 500 x 350 x 350 mm, l'épaisseur des différentes couches du revêtement étant de 40 mm, 25 mm et 1,5 mm, de l'intérieur vers l'extérieur.

Cette enceinte est placée au coeur d'un bûcher obtenu par un feu de bois d'essences diverses à dominance de résineux.

Des sondes thermiques judicieusement disposées, d'une part à l'intérieur de l'enceinte métallique, d'autre part aux interfaces du revêtement au cours de sa réalisation, permettent d'observer l'importance et la répartition de l'effet thermique, diffusé principalement par conduction, en fonction de la durée de l'essai.

Au bout d'une heure d'exposition à cet environnement de flammes et de braises, on constate que:

1) la température de l'enceinte interne n'a pas varié,

2) la courbe d'évolution de la température de la sonde placée entre le feutre minéral et la mousse indique que la température n'évolue pas pendant les 15 premières minutes: elle atteint 100°C au bout des 15 minutes suivantes, et conserve cette valeur jusqu'à la 50 ème minute; ensuite elle s'élève pour atteindre 140°C si l'on prolonge de 10 mm environ l'exposition prévue de 1 heure,

3) la courbe d'évolution de la température de la sonde placée sur la paroi externe du caisson fournit grossièrement la température globale du foyer et des flammes: cette sonde indique une valeur de 700°C pendant les 50 premières minutes; ensuite la température s'établit dans un palier variant entre 900°C et 1000°C.

Après l'essai, le feu est inondé et le caisson retiré. Son aspect visuel n'a pas été modifié par l'agression, hormis une mince intumescence du composite superficiel, qui devient alors légèrement friable.

Les autres couches demeurent parfaitement intactes.

Ce caisson peut être réparé en vue d'un nouvel essai: par incisions peu profondes suivies de pelage, on débarrasse le caisson du composite endommagé, et il suffit alors de renouveler le composite par les méthodes de stratification habituelles.

Exemple 2

Une plaque de revêtement équipée de 4 sondes thermiques placées aux interfaces des couches, est soumise à l'action de la flamme d'un chalumeau oxyacétylénique (buse de 400 litres environ) pendant 30 minutes, à une distance de 100 mm du dard.

L'examen des courbes d'évolution de la température, au terme de l'essai, indique que:

la température de la sonde placée entre le composite superficiel et le feutre minéral s'élève à 1000°C environ,

la température de la sonde placée dans la zone médiane du feutre minéral indique une température de 300°C,

la température de la sonde placée à l'interface du feutre minéral et de la mousse isolante montre que dans cette zone la température atteint 150°C,

la sonde placée dans la zone médiane de la mousse indique que la température reste inférieure à 50°C.

Après réparation de la couche composite externe, cette plaque a subi une nouvelle agression, similaire en tous points, sans endommagement visible, ni perte appréciable de cohésion et de caractéristiques.

**Revendications**

1. Revêtement destiné à la protection thermique d'une structure (1) sur laquelle celui-ci est appliqué ou collé, le revêtement étant soumis à une agression thermique, et est constitué d'au moins trois couches superposées, de nature différente:

une couche interne (4) constituée d'un matériau alvéolaire ou syntactique d'isolation thermique ayant une masse volumique comprise entre environ 30 à 100 kg/m$^3$ et une épaisseur de l'ordre de 10 à 100 mm, destinée à être collée ou appliquée sur la structure,

une couche intermédiaire (3) appliquée sur la couche interne, constituée d'un matériau réfractaire minéral, sous la forme d'un feutre allégé de fibres minérales, et, ayant une masse volumique de 150 à 400 kg/m$^3$,

et une couche superficielle (2) dite externe, appliquée sur la couche intermédiaire (3), constituée d'un matériau composite comprenant une matrice minérale ou organominérale enrobant des charges structurales de renfort, ayant une densité comprise entre environ 1,1 et 1,4.

2 Revêtement selon la revendication 1, caractérisé en ce que la matrice minérale de la couche externe (2) est une matrice à base d'un matériau durcissable apte à durcir en milieu aqueux sous l'action de réactifs alcalins.

3. Revêtement selon la revendication 2, caractérisé en ce que la matrice minérale est à base d'argiles modifiées en vue de les rendre réactives et aptes à réagir en milieu aqueux sous l'action de durcisseurs liquides alcalins.

4. Revêtement selon l'une quelconque des revendications précédentes, caractérisé en ce que les charges structurales de renfort de la couche externe (2) sont constituées de fibres métalliques, en particulier d'acier inoxydable, ou de fibres minérales, en particulier verre, silice, notamment sous forme de tissu, nappe de fibres, mât, ayant reçu un apprêt protecteur contre les réactifs alcalins, ou sous forme de pré-imprégné.

5. Revêtement selon l'une quelconque des revendications 1 à 3, caractérisé en ce que les charges structurales de renfort de la couche externe (2) sont constituées de fibres organiques, en particulier carbone, aramide, polyester, notamment sous forme de tissu, nappe de fibres ou de mât.

6. Revêtement selon l'une quelconque des revendications 1 à 3, caractérisé en ce que les charges structurales de renfort de la couche externe (2) sont constituées de fibres réfractaires notamment sous forme de tissu, nappe de fibres ou de mât, ayant reçu un apprêt protecteur contre les réactifs alcalins, ou sous forme de pré-imprégné.

7. Revêtement selon l'une quelconque des revendications 1 à 6, caractérisé en ce que la couche externe (2) comprend des charges additionnelles de réfractaires pulvérulents, constituées par exemple de céramique, de quartz broyé, de sable, de zircone.

8. Revêtement selon l'une quelconque des revendications précédentes, caractérisé en ce que le matériau constituant la couche interne (4) est un matériau d'origine naturelle comme le liège, ou à base de résine thermodurcissable ou thermoplastique.

9. Revêtement selon la revendication 8, caractérisé en ce que le matériau de la couche interne (4) est une mousse rigide de polyuréthane à cellules fermées.

10. Revêtement selon l'une quelconque des revendications 1 à 8, caractérisé en ce que le matériau de la couche interne (4) est chargé d'une poudre réfractaire.

11. Revêtement selon l'une quelconque des revendications précédentes, caractérisé en ce qu'il comprend des réflecteurs (5) constitués d'écrancs aluminisés disposés au niveau de l'interface de chaque couche, et revêtus d'un film protecteur contre les réactifs alcalins.

12. Revêtement selon la revendication 1, caractérisé en ce que la couche superficielle externe (2) est constituée d'argiles modifiées en vue de les rendre chimiquement réactives et aptes à réagir en milieu aqueux sous l'action de durcisseurs alcalins, les charges structurales de renfort étant constituées de fibres sous forme de tissu, nappe de fibres, pré-imprégné, mât, ayant une épaisseur de l'ordre de 15 mm, la couche intermédiaire a une épaisseur de l'ordre de 25 mm, la couche interne (4) est constituée d'un matériau de faible densité d'origine naturelle, comme du liège, ou à base de résine thermodurcissable ou thermoplastique, ayant une épaisseur de l'ordre de 40 mm, des réflecteurs constitués d'écrans aluminisés étant diposés au niveau de l'interface de chaque couche.

13. Procédé pour la mise en oeuvre d'un revêtement conforme à l'une quelconque des revendications précédentes, sur une structure (1), caractérisé en ce qu'il consiste à réaliser préalablement des plaques constituées des trois couches interne (4) intermédiaire (3) et externe (2) et à rapporter lesdites plaques par collage sur ladite structure.

14. Procédé pour la mise en oeuvre d'un revêtement conforme à l'une quelconque des revendications 1 à 12, caractérisé en ce qu'il consiste à mettre en oeuvre les matériaux des différentes couches, par couches successives, directement sur la structure.

**Patentansprüche**

1. Auskleidung zum thermischen Schutz einer Struktur (1) auf welcher sie befestigt oder geklebt wird, wobei die Auskleidung zur Aufnahme eines thermischen Angriffs ausgelegt ist und mindestens aus drei übereinander liegenden Schichten verschiedener Arten besteht, zwar aus

einer internen Schicht (4) aus einem wabenzelligen oder syntaktischen Wärmeisolierwerkstoff mit einer Dichte zwischen 30 und 100 kg/m$^3$ und eine Dicke von ca. 10 bis 100 mm, die auf die Struktur geklebt oder befestigt wird,

einer mittleren Schicht (3) aus einem feuerfesten mineralischen Werkstoff in der Form eines erleichterten Mineralfaserfilzes mit einer Dichte zwischen 150 und 400 kg/m$^3$, die auf der internen Schicht befestigt wird, sowie aus

einer sogenannten äußeren Oberflächenschicht (2) aus einem Verbundwerkstoff, der sich aus einem mineralischen oder organomineralischen Grundmaterial zur Ummantelung einer strukturellen Verstärkungsfüllmasse zusammensetzt und dessen Dichte zwischen ca. 1,1 und 1,4 liegt.

2. Auskleidung nach Anspruch 1, dadurch gekennzeichnet, daß das mineralische Grundmaterial der äußeren Schicht (2) aus einem Werkstoff besteht, der in wässerigen Umgebung unter Einwirkung eines alkalinischen Reagenzes aushärtet.

3. Auskleidung nach Anspruch 2, dadurch gekennzeichnet, daß das mineralische Grundmaterial aus Ton besteht, der entsprechend reagierend ausgebildet ist, damit er in wässeriger Lösung unter Einwirkung von flüssigen alkalinischen Härtern reaktionsfähig gemacht wird.

4. Auskleidung nach einem beliebigen vorhergehenden Anspruch, dadurch gekennzeichnet, daß die Verstärkungsfüllmassen der äußeren Schicht (2) aus metallischen Fasern, insbesondere aus rostfreiem Stahl, oder aus Mineralfasern, insbesondere aus Glas, Kieselerde, insbesondere in Form von Geweben, Fibervliesen oder Streben, die eine Schutzschicht gegen alkalinische Reagenze erhalten haben, oder aus vorimprägnierten Werkstoffen bestehen.

5. Auskleidung nach einem beliebigen Anspruch 1 bis 3, dadurch gekennzeichnet, daß die Verstärkungsfüllmassen der äußeren Schicht (2) aus organischen Fasern, insbesondere aus Kohlenstoff, Aramid, Polyester, insbesondere in Form von Geweben, Fibervliesen oder Streben bestehen.

6. Auskleidung nach einem beliebigen Anspruch 1 bis 3, dadurch gekennzeichnet, daß die Verstärkungsfüllmassen der äußeren Schicht (2) aus feuerfesten Fasern, insbesondere in Form von Geweben, Fibervliesen oder Streben, die eine Schutzschicht gegen alkalinische Reagenze erhalten haben, oder aus vorimprägnierten Werkstoffen bestehen.

7. Auskleidung nach einem beliebigen Anspruch 1 bis 6, dadurch gekennzeichnet, daß die äußere Schicht (2) zusätzliche Füllmassen aus pulverförmigen feuerfesten Stoffen wie Keramik, gebrochenes Quarz, Sand, Zirkonerde enthält.

8. Auskleidung nach einem beliebigen vorhergehenden Anspruch, dadurch gekennzeichnet, daß der Werkstoff der inneren Schicht (4) aus einem natürlichen Werkstoff wie Kork oder aus duroplastischem oder thermoplastischem Harz besteht.

9. Auskleidung nach Anspruch 8, dadurch gekennzeichnet, daß der Werkstoff der inneren Schicht (4) aus einem Polyurethan-Hartschaum mit geschlossenen Zellen besteht.

10. Auskleidung nach einem beliebigen Anspruch 1 bis 8, dadurch gekennzeichnet, daß dem Werkstoff der inneren Schicht (4) ein feuerfestes Pulver als Füllstoff beigemischt wird.

11. Auskleidung nach einem beliebigen Anspruch 1 bis 10, dadurch gekennzeichnet, daß sie mit Reflektoren (5) versehen ist, die aus auf Höhe der Schnittstelle jeder einzelnen Schicht angeordneten aluminisierten Schirmen bestehen, wobei diese Reflektoren eine Schutzschicht gegen alkalinische Reagenze aufweisen.

12. Auskleidung nach Anspruch 1, dadurch gekennzeichnet, daß die äußere Schicht aus Ton besteht, der entsprechend reagierend ausgebildet ist, damit er in wässeriger Lösung unter Einwirkung von flüssigen alkalinischen Härtern reaktionsfähig gemacht wird, wobei die strukturellen Verstärkungsfüllmassen aus Fasern in Form von Geweben, Fibervliesen, vorimprägnierten Werkstoffen oder Streben mit einer Dicke von ca. 40 mm bestehen, wobei die innere Schicht (4) aus einem leichten Werkstoff natürlicher Art wie Kork oder aus duroplastischem oder thermoplastischem Harz mit einer Dicke von ca. 1,5 mm besteht und wobei aus aluminisierten Schirmen ausgebildete Reflektoren auf Höhe der Schnittstelle jeder einzelnen Schicht angeordnet sind.

13. Verfahren für den Einsatz einer Auskleidung nach einem beliebigen vorhergehenden Anspruch auf einer Struktur (1), dadurch gekennzeichnet, daß es darin besteht, zuvor aus diesen drei inneren (4), mittleren (3) bzw. äußeren (2) Schichten bestehenden Schutzplatten zu fertigen und diese Schutzplatten durch Verklebung auf die erwähnte Struktur zu befestigen.

14. Verfahren für den Einsatz einer Auskleidung nach einem beliebigen Anspruch 1 bis 12, dadurch gekennzeichnet, daß es darin besteht, die Werkstoffe der verschiedenen Schichten Schicht nach Schicht unmittelbar auf der Struktur einzusetzen.

**Claims**

1. An insulation assembly designed for thermal protection of a structure (1) on which it is laid or glued, the insulation assembly being subjected to a thermal aggression, and comprising at least three superimposed layers of different types:

an inner layer (4) consisting of an alveolar or syntactic thermally insulating material with a density ranging from approximately 30 to 100 kg/m$^3$ and a thickness on the order of 10 to 100 mm, intended to be glued or laid on the structure,

an intermediate layer (3) laid on the inner layer, consisting of a refractory mineral material, in the form of a lightened mineral fiber felt, with a density of 150 to 400 kg/m$^3$,

and a superficial layer (2), called outer layer, laid on the intermediate layer (3), consisting of a composite material comprising a mineral or organomineral matrix embedding strengthening structural fillers, with a specific gravity of about 1.1 to 1.4.

2. An insulation assembly according to claim 1, characterized in that the mineral matrix of the outer layer (2) has a base of hardenable material capable of hardening in an aqueous medium in the presence of alkaline reagents.

3. An insulation assembly according to claim 2, characterized in that the mineral matrix has a base of clays modified so as to be made reactive and capable of reacting in an aqueous medium in the presence of liquid alkaline reagents.

4. An insulation assembly according to any of claims 1 to 3, characterized in that the structural fillers strengthening the outer layer (2) consist of metal fibers, in particular stainless steel fibers, or mineral fibers, in particular glass, silica fibers, especially in the form of a fabric, a fiber ply, a mat covered with a finish which protects them from alkaline reagents, or in the form of a prepreg.

5. An insulation assembly according to any of claims 1 to 3, characterized in that the structural fillers strengthening the outer layer (2) consist of organic fibers, in particular carbon, aramid, polyester fibers, especially in the form of a fabric, a fiber ply or a mat.

6. An insulation assembly according to any of claims 1 to 3, characterized in that the structural fillers strengthening the outer layer (2) consist of refractory fibers, especially in the form of a fabric, a fiber ply or a mat, covered with a finish which protects them from alkaline reagents, or in the form of a prepreg.

7. An insulation assembly according to any of claims 1 to 6, characterized in that the outer layer (2) includes additional pulverulent refractory fillers, consisting, for instance, of ceramic, ground quartz, sand, zirconia.

8. An insulation assembly according to any of claims 1 to 7, characterized in that the material constituting the inner layer (4) is a material of a natural origin such as cork, or a thermosetting or thermoplastic resin-base material.

9. An insulation assembly according to claim 8, characterized in that the material of the inner layer (4) is a rigid closed-cell polyurethane foam.

10. An insulation assembly according to any of claims 1 to 8, characterized in that the material of the inner layer (4) is filled with a refractory powder.

11. An insulation assembly according to any of claims 1 to 10, characterized in that it includes reflectors (5) consisting of aluminized screens located at the interfaces between layers, and coated with a film which protects them from alkaline reagents.

12. An insulation assembly according to claim 1, characterized in that the outer superficial layer (2) consists of clays modified so as to be made chemically reactive and capable of reacting in an aqueous medium in the presence of alkaline hardeners, the strengthening structural fillers consisting of fibers in the form of a fabric, a fiber ply, a prepreg, a mat, with a thickness on the order of 1.5 mm, the thickness of the intermediate layer is on the order of 25 mm, the inner layer (4) consists of a low-density material of a natural origin, such as cork, or a thermosetting or thermoplastic resin-base material, with a thickness on the order of 40 mm, reflectors consisting of aluminized screens being located at the interfaces between layers.

13. A process for laying an insulation assembly according to any of claims 1 to 12 on a structure (1), characterized in that it consists in previously manufacturing plates comprising three inner (4), intermediate (3) and outer (2) layers and in gluing said plates to said structure.

14. A process for laying an insulation assembly according to any of claims 1 to 12, characterized in that it consists in laying the materials of the various layers, in successive layers, directly on the structure.

Fig. 1